# EUROPEAN PATENT APPLICATION

(11) **EP 4 810 820 A1**
(43) Date of publication of application: **23.09.2026**
(21) Application number: 24891002.8
(22) Date of filing: 28.06.2024
(51) Int. Cl.: F16F 1/38

(54) **BUSH AND MANUFACTURING METHOD THEREFOR**

(30) Priority: 16.11.2023 JP 2023195400
(71) Applicant: Prospira Corporation, Kanagawa prefecture 212-0013 (JP)
(72) Inventor: OTSU, Kazutaka, Kawasaki city, Kanagawa 212-0013 (JP)
(74) Representative: V.O.
(86) International application number: PCT/JP2024/023607
(87) International publication number: WO 2025/104957

(57) **Abstract**

In a bush and a manufacturing method therefor, which can increase the friction with a member to be fastened while suppressing water ingress into the bush, a bush 1 includes an outer cylinder 11, an inner cylinder 12 disposed within a hollow portion of the outer cylinder 11, and an elastic body 13 interposed between the outer cylinder 11 and the inner cylinder 12 to connect the outer cylinder 11 and the inner cylinder 12, each axial end face portion 12A, 12B of the inner cylinder 12 includes a ridge-and-groove portion 21 in which ridges 211 and grooves 212 are alternately and continuously formed, and a planar portion 22 having a flat surface 220, and the planar portion 22 is located on an outer peripheral side of the ridge-and-groove portion 21 and the ridges 211 protrude beyond a position of the surface 220 of the planar portion 22.

## Description

### TECHNICAL FIELD

The present invention relates to a bush and a method for manufacturing the same.

### BACKGROUND ART

In typical cases, for fastening a bush to a member to be fastened, such as a bracket, a bolt is commonly used for tightening them. For example, in the case of using a bush for a vehicle suspension, the friction between the end face of the inner cylinder of the bush and the fastening surface of the member to be fastened needs to be greater than the input load, so as to prevent the bush from slipping, which may be caused by the input to the suspension.

For example, Patent Literature 1 discloses a bush including a cylindrical mounting fitting (inner cylinder) for attaching to a counterpart member serving as the member to be fastened, and rubber vulcanized and bonded onto the outer surface of the mounting fitting, wherein the mounting fitting is provided with serrations on the contact surface which is to be in contact with the counterpart member, and a wall portion, which is raised so as to close the valley portions of the serrations, is formed on the rubber bonding surface side adjacent to the serrations formed on the contact surface.

In the bush according to Patent Literature 1, the wall portion rises to the same height as the peaks of the serrations, and the wall portion and the serrations are brought into close contact with the counterpart member. This prevents the mounting fitting from loosening due to vibrations or the like, while also suppressing water ingress into the bushing to prevent rust formation.

### CITATION LIST

### PATENT LITERATURE

Patent Literature 1: JP-A-H11-22770

### SUMMARY OF INVENTION

### TECHNICAL PROBLEM

However, in the bush according to Patent Literature 1, the peaks of the serrations are formed at the same height as the wall portion, which prevents the serrations from being sufficiently engaged with the counterpart member. In particular, in the case of using the bush according to Patent Literature 1 for an electric-drive vehicle, which is heavier than a conventional vehicle driven by an internal combustion engine and has a larger input load to the suspension, insufficient friction between the contact surface of the mounting fitting and the counterpart member may cause the bush to slip.

Therefore, an object of the present invention is to provide a bush and a method for manufacturing the same, which can increase friction with a member to be fastened while suppressing water ingress into the bush.

### SOLUTION TO PROBLEM

To achieve the object described above, the present invention provides a bush, comprising: an outer cylinder; an inner cylinder disposed within a hollow portion of the outer cylinder; and an elastic body interposed between the outer cylinder and the inner cylinder to connect the outer cylinder and the inner cylinder, an axial end face portion of the inner cylinder being provided with: a ridge-and-groove portion in which ridges and grooves are alternately and continuously formed; and a planar portion having a surface which is flat, wherein the planar portion is located on an outer peripheral side of the ridge-and-groove portion, and the ridges protrude beyond a position of the surface of the planar portion.

### ADVANTAGEOUS EFFECTS OF INVENTION

According to the present invention, it is possible to increase friction with a member to be fastened while suppressing water ingress into the bush. Other problems, features, and advantageous effects not described above will be clarified by the following description of embodiments.

### BRIEF DESCRIPTION OF DRAWINGS

[FIG. 1] FIG. 1 illustrates a mounted state of a bush according to an embodiment of the present invention.
[FIG. 2] FIG. 2 is an axial sectional view illustrating an example of a structure of a bush.
[FIG. 3] FIG. 3 is an enlarged view illustrating an X portion of FIG. 2.
[FIG. 4] FIG. 4 is a plan view of an inner cylinder as viewed from a Y-arrow direction of FIG. 2.
[FIG. 5] FIG. 5 is an enlarged view illustrating a Z portion of FIG. 1.
[FIG. 6] FIG. 6 illustrates a state in which an inner cylinder is set in a rubber molding die.
[FIG. 7] FIG. 7 is a plan view of an inner cylinder according to the first modification of the present invention as viewed from a Y-arrow direction of FIG. 2.
[FIG. 8] FIG. 8 is a plan view of an inner cylinder according to the second modification of the present invention as viewed from a Y-arrow direction of FIG. 2.
[FIG. 9] FIG. 9 is a plan view of an inner cylinder according to the third modification of the present invention as viewed from a Y-arrow direction of FIG. 2.

### DESCRIPTION OF EMBODIMENTS

Hereinafter, an embodiment of a bush according to the present invention will be described referring to an example of a vehicle bush employed for connection of a vibration member in a vehicle suspension.

### <Overall structure of bush 1>

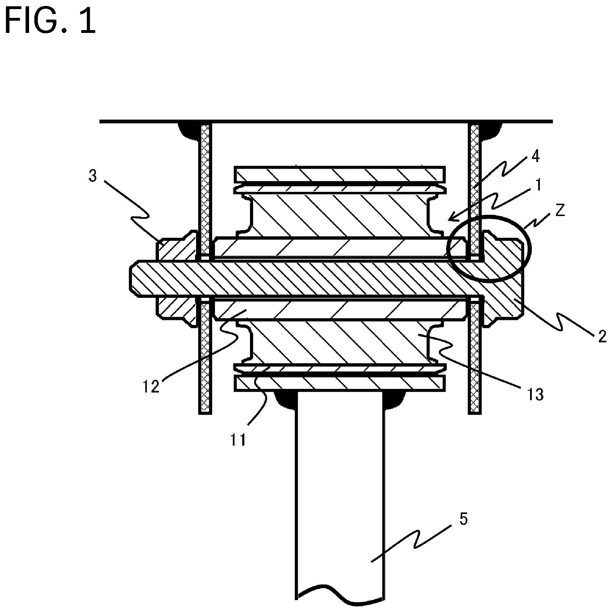

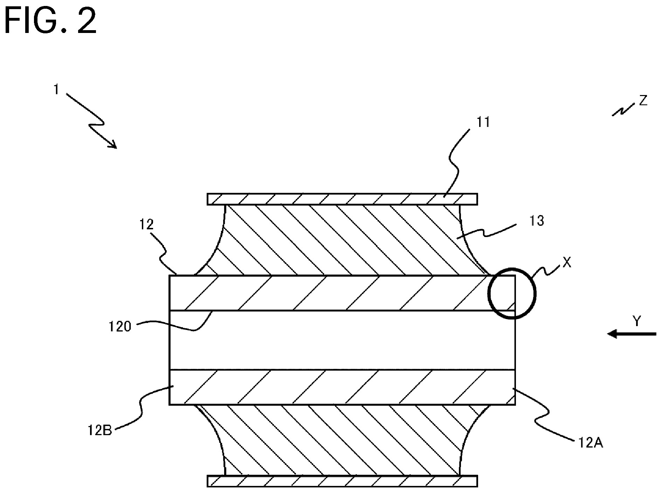

First, the overall structure of the bush 1 will be described with reference to FIG. 1 and FIG. 2.

FIG. 1 illustrates a mounted state of the bush 1 according to the embodiment of the present invention. FIG. 2 is an axial sectional view illustrating an example of the structure of the bush 1.

The bush 1 includes the outer cylinder 11, an inner cylinder 12 disposed within a hollow portion of the outer cylinder 11, and an elastic body 13 interposed between the outer cylinder 11 and the inner cylinder 12 to connect the outer cylinder 11 and the inner cylinder 12. In the present embodiment, each of the outer cylinder 11 and the inner cylinder 12 is formed of a cylindrical metal member. The outer cylinder 11 and the inner cylinder 12 do not necessarily have to be cylindrical, and may be, for example, rectangular tubes. In other words, the outer cylinder 11 and the inner cylinder 12 do not necessarily need to have circular cross-sections when viewed from their axial end faces or when cut along their radial directions, but they may be, for example, polygonal.

The hollow portion of the inner cylinder 12 serves as a bolt hole 120 through which a bolt 2 is inserted. As illustrated in FIG. 1, the bolt 2 is inserted from one end of the bolt hole 120 and fastened to a nut 3 disposed at the other end thereof.

In the inner cylinder 12, its end face portions 12A, 12B at both axial ends extend outward beyond the outer cylinder 11. Hereinafter, the end face portion 12A at one end of the bolt hole 120 is referred to as "the one-end face portion 12A", and the end face portion 12B at the other end of the bolt hole 120, where the nut 3 is disposed, is referred to as "the other-end face portion 12B".

As illustrated in FIG. 1, when the bolt 2 is fastened to the nut 3, a member 4 to be fastened are sandwiched between the one-end face portion 12A of the inner cylinder 12 and the bolt 2 and between the other-end face portion 12B of the inner cylinder 12 and the nut 3, respectively. At this time, the one-end face portion 12A and the other-end face portion 12B are brought into a state in which they are strongly pressed against the member 4 to be fastened by the axial force of the bolt 2 (also referred to as a contact state or a pressed-fit state). The member 4 to be fastened may be, for example, a bracket on the vehicle body side or a bracket on the tire side.

In FIG. 1, the bush 1 is mounted, for example by press-fitting, to the tip of a link member 5 of a vehicle suspension. The bush 1 connects the member 4 to be fastened and the link member 5, and absorbs vibration generated in the member 4 to be fastened and the link member 5 by means of an elastic body 13. In the present embodiment, the elastic body 13 is formed of a rubber member. However, the elastic body 13 does not necessarily have to be a rubber member, and may be any material capable of absorbing vibration.

### <Structures of end face portions 12A, 12B>

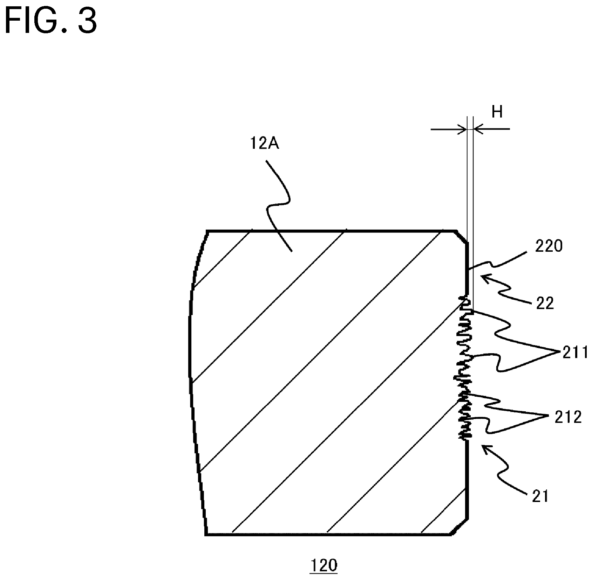

Next, the structures of the end face portions 12A, 12B of the inner cylinder 12 will be described with reference to FIG. 3 to FIG. 6. The one-end face portion 12A and the other-end face portion 12B have a similar configuration, and accordingly, the following description refers to the one-end face portion 12A as an example, and the description of the other-end face portion 12B will be omitted.

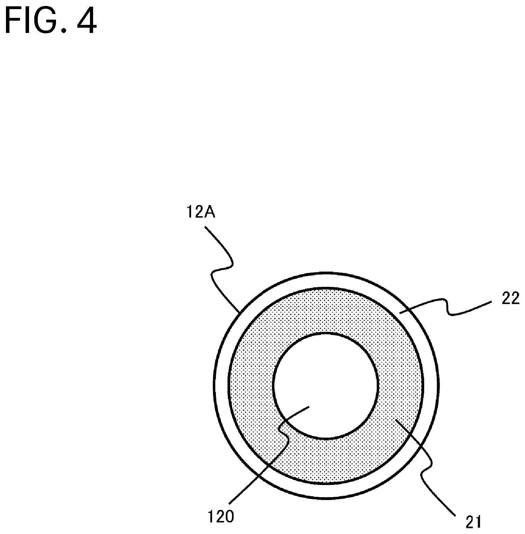

FIG. 3 is an enlarged view illustrating an X portion of FIG. 2. FIG. 4 is a plan view of the inner cylinder 12 as viewed from a Y-arrow direction of FIG. 2.

As illustrated in FIG. 3, the one-end face portion 12A of the inner cylinder 12 is provided with a ridge-and-groove portion 21 in which ridges 211 and grooves 212 are alternately and continuously formed, and a planar portion 22 having a surface 220 which is flat.

The ridges 211 of the ridge-and-groove portion 21 protrude beyond the position of the surface 220 of the planar portion 22. In the present embodiment, heights H (illustrated in FIG. 3) of the ridges 211 from the position of the surface 220 of the planar portion 22 are not even. The height H of each of the ridges 211 is, for example, about 0.1 to 0.2 mm.

In the present embodiment, as illustrated in FIG. 4, the ridges 211 and the grooves 212 are formed concentrically with the inner cylinder 12, and are arranged alternately in the radial direction on the one-end face portion 12A. In FIG. 4, the ridge-and-groove portion 21 is indicated by hatching. The ridges 211 and the grooves 212 do not necessarily have to be formed concentrically with the inner cylinder 12, and may be, for example, formed in a spiral or helical shape. It is preferable that the ridges 211 and the grooves 212 extend at least in the circumferential direction of the inner cylinder 12.

The ridge-and-groove portion 21 is formed, for example, by laser processing. Specifically, by scanning a laser concentrically with the inner cylinder 12 on the one-end face portion 12A of the inner cylinder 12 at a pitch of about 0.05 mm, the grooves 212 are formed in the radial direction. At this time, the metal molten by the heat of the laser solidifies on both sides of each groove 212, which forms the ridges 211.

These solidified portions are not formed uniformly (not formed with the same shape), and thus, as described above, the ridges 211 have uneven heights. In other words, performing the laser processing to form the ridge-and-groove portion 21 enables the ridges 211 to be formed in random shapes easily.

Furthermore, unlike processing using, for example, molds or shot blasting, laser processing does not require large equipment, and moreover, has no manufacturing process constraints, such as having to be performed within predetermined steps. Therefore, it is highly convenient and allows the ridge-and-groove portion 21 to be easily formed.

As illustrated in FIG. 3 and FIG. 4, the planar portion 22 is an area that has not undergone laser processing (non-laser-processed area) and is located on the outer peripheral side of the ridge-and-groove portion 21. In the present embodiment, the planar portion 22 is also provided concentrically with the inner cylinder 12 on the one-end face portion 12A, in the same manner as the ridge-and-groove portion 21. The width in the radial direction of the planar portion 22 is set smaller than the width in the radial direction of the ridge-and-groove portion 21.

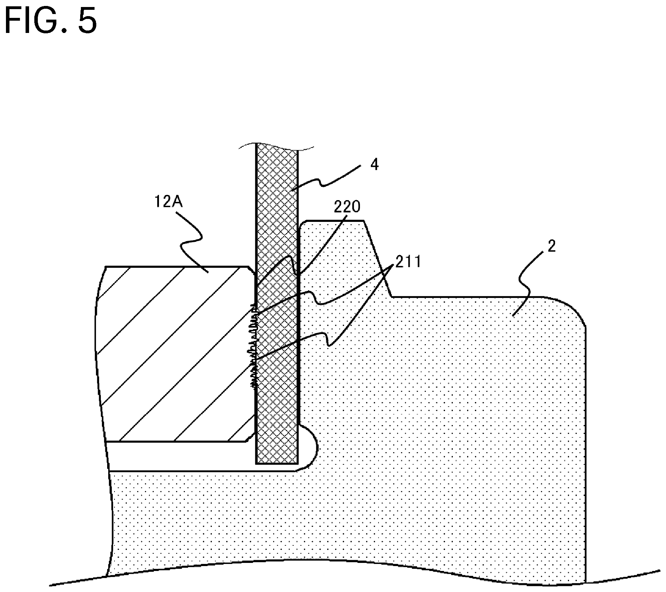

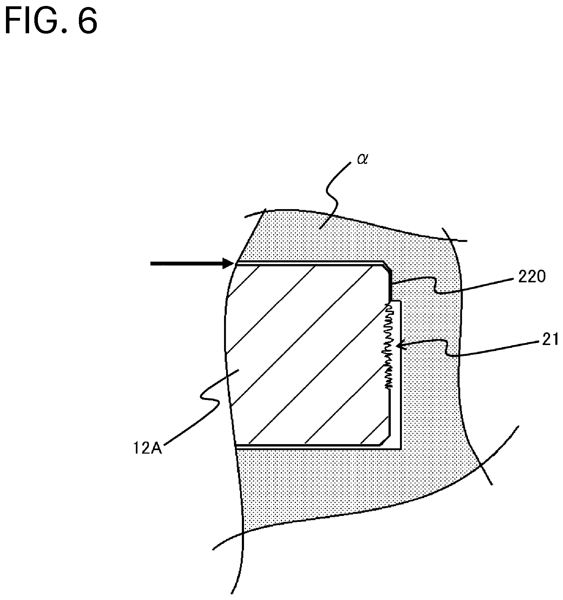

FIG. 5 is an enlarged view illustrating a Z portion of FIG. 1. FIG. 6 is a view illustrating a state in which the inner cylinder 12 is set in a rubber molding die α.

As illustrated in FIG. 5, when the bolt 2 is fastened to the nut 3, the one-end face portion 12A of the inner cylinder 12 is pressed against the member 4 to be fastened. At this time, on the planar portion 22 located on the outer peripheral side of the ridge-and-groove portion 21, the surface 220 is brought into close contact with the member 4 to be fastened. This enables suppression of water ingress from the outside to the inside of the inner cylinder 12, and also prevention of rust formation in the inner cylinder 12.

Furthermore, the ridges 211 of the ridge-and-groove portion 21 protrude beyond the position of the surface 220 of the planar portion 22, which causes the force in which the ridges 211 engage into the member 4 to be fastened is greater than the force in which the planar portion 22 engages into the member 4 to be fastened when the one-end face portion 12A is pressed against the member 4 to be fastened. This increases the friction between the one-end face portion 12A of the inner cylinder 12 and the member 4 to be fastened compared to when the tip positions of the ridges 211 are aligned with the surface 220 of the planar portion 22. Therefore, even when a large input load is applied to the suspension, slippage of the bush 1 can be suppressed.

In the present embodiment, the extending directions of the ridges 211 and grooves 212 correspond to the circumferential direction of the inner cylinder 12, and this direction intersects the sliding direction of the bush 1 (extending direction of the link member 5 of the suspension). This increases the friction between the one-end face portion 12A of the inner cylinder 12 and the member 4 to be fastened compared to the case where the extending directions of the ridges 211 and grooves 212 correspond to the radial direction of the inner cylinder 12.

Furthermore, in the present embodiment, the ridges 211 and the grooves 212 are formed concentrically with the inner cylinder 12. This enables the friction between the one-end face portion 12A of the inner cylinder 12 and the member 4 to be fastened to be maintained regardless of the mounting direction of the inner cylinder 12 relative to the link member 5 of the suspension.

Still further, as illustrated in FIG. 6, in the case of vulcanizing and bonding the rubber as the elastic body 13 to the outer surface of the inner cylinder 12, setting the inner cylinder 12 in the rubber molding die α causes the surface 220 of the planar portion 22 of the inner cylinder 12 to be in close contact with the inner surface of the rubber molding die α. This prevents the rubber flowing in from the direction of the arrow illustrated in FIG. 6 from protruding to the inside of the inner cylinder 12.

### <Modifications>

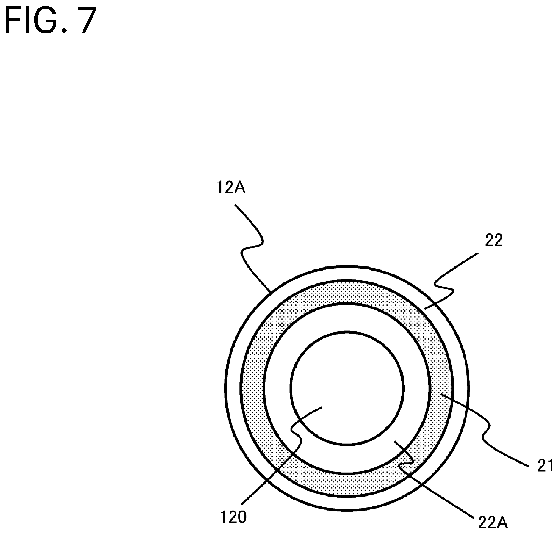

Next, the bush 1 according to the modifications of the present invention will be described with reference to FIG. 7 to FIG. 9. In the following, the elements common to those described in the embodiment above will be provided with the same reference signs, and the detailed description thereof will be omitted.

FIG. 7 is a plan view of the inner cylinder 12 according to the first modification of the present invention as viewed from the Y-arrow direction of FIG. 2. In FIG. 7, in the same manner in FIG. 4, the ridge-and-groove portion 21 is indicated by hatching.

In the one-end face portion 12A of the inner cylinder 12 according to the first modification, a planar portion 22A is further provided on the inner peripheral side of the ridge-and-groove portion 21. Where the planar portion 22 located on the outer peripheral side of the ridge-and-groove portion 21 is referred to as "first planar portion 22" and the planar portion 22 located on the inner peripheral side of the ridge-and-groove portion 21 is referred to as "second planar portion 22A", the first planar portion 22 and the second planar portion 22A are positioned with the ridge-and-groove portion 21 interposed therebetween in the radial direction of the inner cylinder 12.

Therefore, providing the second planar portion 22A on the inner peripheral side of the ridge-and-groove portion 21 in the one-end face portion 12A causes the surface 220 of the second planar portion 22A to be adhered to the member 4 to be fastened when the one-end face portion 12A of the inner cylinder 12 is pressed against the member 4 to be fastened. This enables suppression of water ingress from the inside of the inner cylinder 12 as well.

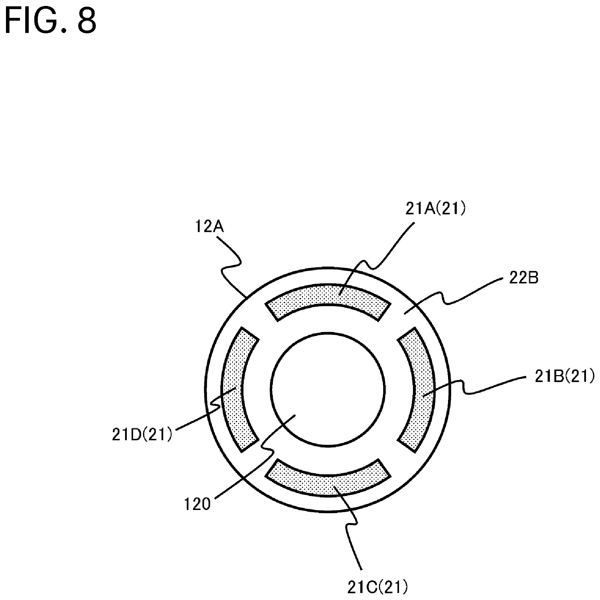

FIG. 8 is a plan view of the inner cylinder 12 according to the second modification of the present invention as viewed from the Y-arrow direction of FIG. 2. In FIG. 8, in the same manner as FIG. 4, the ridge-and-groove portion 21 is indicated by hatching.

In the one-end face portion 12A of the inner cylinder 12 according to the second modification, the ridge-and-groove portion 21 includes multiple pieces, and the multiple ridge-and-groove portions 21 are provided at predetermined spacings along the circumferential direction of the inner cylinder 12. In FIG. 8, the number of ridge-and-groove portions 21 as provided are four (first to fourth ridge-and-groove portions 21A to 21D), and the four ridge-and-groove portions 21 are arranged at regular spacings along the circumferential direction of the inner cylinder 12.

Thus, the planar portion 22B is formed over the outer and inner peripheral sides of the four ridge-and-groove portions 21, as well as between the adjacent ridge-and-groove portions 21. Specifically, the planar portion 22B extends between the first ridge-and-groove portion 21A and the second ridge-and-groove portion 21B, between the second ridge-and-groove portion 21B and the third ridge-and-groove portion 21C, between the third ridge-and-groove portion 21C and the fourth ridge-and-groove portion 21D, and between the fourth ridge-and-groove portion 21D and the first ridge-and-groove portion 21A.

Therefore, providing the plurality of ridge-and-groove portions 21 at predetermined spacings along the circumferential direction of the inner cylinder 12 causes the total area of the plurality of ridge-and-groove portions 21 to be smaller than the area of the ridge-and-groove portion 21 according to the embodiment and first modification described above. This shortens the laser processing time.

In FIG. 8, the four ridge-and-groove portions 21 have the same size and are arranged at regular spacings along the circumferential direction of the inner cylinder 12, but is not limited thereto. The ridge-and-groove portions 21 may have different sizes, and the distances between the adjacent ridge-and-groove portions 21 do not necessarily have to be constant.

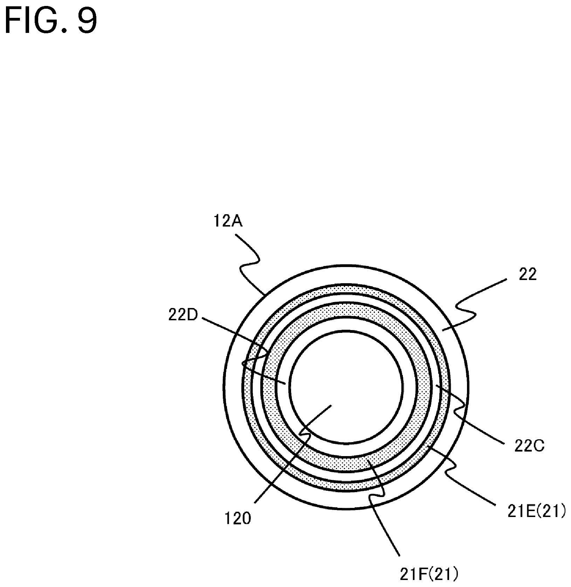

FIG. 9 is a plan view of the inner cylinder 12 according to the third modification of the present invention as viewed from the Y-arrow direction of FIG. 2. In FIG. 9, in the same manner in FIG. 4, the ridge-and-groove portion 21 is indicated by hatching.

In the one-end face portion 12A of the inner cylinder 12 according to the second modification, the ridge-and-groove portion 21 includes the multiple ridge-and-groove portions 21, and the multiple ridge-and-groove portions 21 formed concentrically with the inner cylinder 12 are provided at predetermined spacings along the radial direction of the inner cylinder 12. In FIG. 9, the number of ridge-and-groove portions 21 as provided is two, and the two ridge-and-groove portions 21 (fifth ridge-and-groove portion 21E and sixth ridge-and-groove portion 21F) are arranged along the radial direction of the inner cylinder 12. Regarding the two ridge-and-groove portions 21, the ridge-and-groove portion 21 located on the outer peripheral side is referred to as "fifth ridge-and-groove portion 21E", and the ridge-and-groove portion 21 located on the inner peripheral side is referred to as "sixth ridge-and-groove portion 21F".

Thus, in the one-end face portion 12A of the inner cylinder 12 according to the second modification, the first planar portion 22 is formed on the outer peripheral side of the fifth ridge-and-groove portion 21E, a third planar portion 22C is formed between the fifth ridge-and-groove portion 21E and the sixth ridge-and-groove portion 21F, and a fourth planar portion 22D is formed on the inner peripheral side of the sixth ridge-and-groove portion 21F. The distance between the fifth ridge-and-groove portion 21E and the sixth ridge-and-groove portion 21F, in other words, the width in the radial direction of the third planar portion 22C, is, for example, about 0.5 mm.

Therefore, providing the plurality of ridge-and-groove portions 21 at predetermined spacings along the radial direction of the inner cylinder 12 to increase the area of the planar portion 22 (non-laser-processed area) shortens the laser processing time.

In the above, the embodiment and modifications of the present invention have been described. However, the present invention is not limited to the embodiment and modifications described above, and includes various other modifications. For example, the embodiments and modifications described above are explained in detail to facilitate understanding of the present invention, and the present invention is not necessarily limited to those having all the features described above. Furthermore, part of the features of the embodiment and modifications described above can be replaced with some features of other embodiments, and the features of other embodiments can be added to the features of the embodiment and modifications. Still further, part of the features of the embodiment and modifications described above can be deleted or replaced with other features, or other features may be added in the features of the embodiment and modifications described above.

For example, in the embodiment and modifications described above, the ridges 211 and the grooves 212 extend in the circumferential direction of the inner cylinder 12 and are arranged in the radial direction but is not limited thereto, and there are no particular limitations on the forming direction and arrangement direction of the ridges 211 and grooves 212.

Furthermore, in the embodiment and modifications described above, the protruding heights of the ridges 211 are not even but is not limited thereto, and they may be even.

Furthermore, in the embodiment and modifications described above, the ridge-and-groove portion 21 is formed by laser processing but is not limited thereto, and any processing method may be employed as long as it is capable of forming the ridge-and-groove portion 21.

Still further, the ridge-and-groove portion 21 and the planar portion 22 may be provided on only one of the one-end face portion 12A and the other-end face portion 12B of the inner cylinder 12, or may be provided on both.

### REFERENCE SIGNS LIST

- 1:: Bush
- 11:: Outer cylinder
- 12:: Inner cylinder
- 12A:: One-end face portion (end face portion)
- 12B:: The other-end face portion (end face portion)
- 13:: Elastic body
- 21, 21A-21F:: Ridge-and-groove portion
- 22, 22A-22D:: Planar portion
- 211:: Ridge
- 212:: Groove
- 220:: Surface

## Claims

1. A bush, comprising:
an outer cylinder;
an inner cylinder disposed within a hollow portion of the outer cylinder; and
an elastic body interposed between the outer cylinder and the inner cylinder to connect the outer cylinder and the inner cylinder,
an axial end face portion of the inner cylinder being provided with:
a ridge-and-groove portion in which ridges and grooves are alternately and continuously formed; and
a planar portion having a surface which is flat, wherein
the planar portion is located on an outer peripheral side of the ridge-and-groove portion, and
the ridges protrude beyond a position of the surface of the planar portion.

2. The bush according to claim 1, wherein
the ridges have uneven heights above the position of the surface of the planar portion.

3. The bush according to claim 1, wherein
the ridges and the grooves extend in a circumferential direction of the inner cylinder and are arranged in a radial direction of the inner cylinder.

4. The bush according to claim 3, wherein
the ridges and the grooves are formed concentrically with the inner cylinder.

5. The bush according to claim 3, wherein
the ridge-and-groove portion includes multiple ridge-and-groove portions, and
the multiple ridge-and-groove portions are provided at spacings along the circumferential direction of the inner cylinder.

6. The bush according to claim 3, wherein
the ridge-and-groove portion includes multiple ridge-and-groove portions, and
the multiple ridge-and-groove portions are provided at spacings along the radial direction of the inner cylinder.

7. The bush according to claim 1, wherein
the planar portion is further provided on an inner peripheral side of the ridge-and-groove portion in the end face portion of the inner cylinder.

8. A method for manufacturing the bush according to claim 1, wherein
the ridge-and-groove portion is formed by laser processing.
